# NEW EUROPEAN PATENT SPECIFICATION

(11) **EP 0 253 543 B2**
(45) Date of publication and mention of the opposition decision: **20.10.1993**
(45) Mention of the grant of the patent: 03.07.1991
(21) Application number: 87305914.1
(22) Date of filing: 03.07.1987
(51) Int. Cl.: C09D 11/02, C09D 5/22

(54) **Printing ink**
Drucktinte
Encre d'imprimerie

(30) Priority: 10.07.1986 GB 8616878
(43) Date of publication of application: 20.01.1988
(73) Proprietor: THOMAS DE LA RUE & COMPANY LIMITED, London WC2N 4DE (GB)
(72) Inventor: Beck, Jozef, Slough Berkshire, SL1 6LG (GB); Nutton, Andrew, Maidenhead Berkshire SL6 8RZ (GB)
(74) Representative: Perry, Robert Edward

(56) References cited:
- GB-A- 1 536 403
- US-A- 4 066 280
- US-A- 4 186 020
- US-A- 4 233 195
- US-A- 4 490 177
- CHEMICAL ABSTRACTS, vol. 92, no. 26, 1980, page 81, abstract no. 216903u, Columbus, Ohio, US; & JP-A-80 12 122 (BIKO GIKEN Y.K.) 28-01-1980

## Description

This invention relates to novel coating compositions which are potentially useful in a wide range of applications. The compositions may be of various types, including paints, but the present invention particularly relates to printing inks for use in the production of security documents such as banknotes, cheques, passports or other valuable documents.

Printing inks which display a metallic appearance are well-known; commonly these comprise finely particulate metals or metallic compounds, for example oxides. There are also well-known printing inks which comprise a luminescent material (in this specification "luminescent material" means any fluorescent material or potentially fluorescent material, and the term "fluorescent material" includes phosphorescent material).

US-A-4490177 discloses inks containing both metallic compounds and luminescent materials which are combined with a high amount of solvent, in order that the metallic and luminescent components of the ink separate in use. It is also the case that these components separate in, say, a pen; the pen must therefore be shaken before use.

This invention relates to novel coating compositions which comprise a mixture of:-
1. a finely particulate lustrous metallic component selected from aluminium, nickel, silver, steels, bronzes and brasses
2. a luminescent material; and
3. an inert component in an amount sufficient that the composition is substantially homogeneous.

The composition preferably comprises between 5% and 70% by weight of the finely particulate lustrous metallic component and between 1% and 60% by weight of the luminescent material. The more preferred ranges of values of these components in the composition are between 20% and 60% by weight of the metallic component and between 5% and 40% by weight of the luminescent material. The composition additionally includes one or more inert components such as resins, varnishes, fillers and/or extenders, of a nature and to extent which renders the composition useful for its particular intended use. The inert component preferably gives the composition a viscosity of between 10 and 500 poise; preferably the viscosity range is between 20 and 200 poise. A little solvent may be added to ensure that the composition is homogeneous but, in contrast to the composition of US-A-4490177, the amount of solvent is usually less than 5% by weight, and rarely more than 10% by weight. The combination of an alkyd or other resin and a small amount of solvent will provide a suitable inert "vehicle".

The particles of the finely-divided metallic compound may range in size from the infinitesimally small to, preferably, a maximum size of 20 f,.lm. The particulate metallic compounds may be in the form of powders or flakes and may be incorporated in the composition in the form of pre-prepared metallic inks. Some metallic inks may include a resin or other component which can act as the inert component.

The luminescent material, when it exhibits fluorescent properties, may be an organic dye, organic pigment, brightener or metal complex, but any coloured or colourless fluorescent, phosphorescent, or potentially fluorescing material may be used. Metal sulphides or rare earth compounds (either doped or undoped) are examples of suitable phosphorescent materials.

It has been found that particularly useful compositions according to this invention comprise metallic components and luminescent materials which both have particle sizes less than 10 f,.lm.

When printing inks made from compositions according to this invention are used to print security documents, it has been found that the properties of the admixed metallic and luminescent components give rise to novel features which may be used to enhance the inherent security value of the document. For example, the metallic component of a composition will give a certain fixed coloured, metallic, lustre to the printed document when it is viewed under daylight but, when the document is viewed under ultra- violet light, the luminescent component of the ink composition will fluoresce. The genuineness of the document may be determined by the similarities or differences in characteristics such as colour of the ink composition when the document is inspected a) in daylight and b) under ultra-violet light, such as is obtained from commonly-available UV lamps. The production of such characteristics is determined by the type of fluorphor/phosphor incorporated in the composition. The addition of an inert component maintains the composition in a homogeneous form before and during use.

Metallic materials suitable for use in connection with this invention include "Wolstenholme" aluminium grades Rich Pale Super TR and Rich Gold Offset, Super 120 and Super 150; "Novamet" Stainless Steel Fine Leafing Grade; and "Stay" steel Grade 316L. Metallic inks suitable for inclusion in the compositions of this invention include "SICPA" Metallic Ink - Silver; "Mander Kidd" Extra Gold ink; and "Johnson and Bloys" Silver Ink.

Examples of suitable luminescent materials are:-Fluorescent Dyes:
"Tinopal CBX" (available from Ciba Geigy);
"Samaron Brilliant Yellow HIOGF" (available from Hoechst UK Ltd.); and
"Resolin Brilliant Yellow" (available from Bayer UK Ltd.).

Fluorescent Pigments:
"Lumogen T Red GG" (available from BASF);
Zinc Oxyquinolate (supplied by Holliday Dyes and Chemicals Ltd.);
"UV Yellow Orange FP777" (available from Sterling Colour Co. Ltd.).

Fluorescent brighteners:
"Uvitex A" and "Uvitex P" (available from Ciba Geigy).

Phosphorescent rare earths:
Terbium-activated gadolinium oxysulphide (Gd₂0₂S:Tb) (available from British Rare Earths Limited);
"LUMILUX Red CD105" (available from Rie- delde-Haen);
Europium-activated Yttrium Oxide (Y₂0₃:Eu) (available from Riedel-de-Haen);

Non-rare earth phosphorescent materials:
"LUMILUX Yellow CD114", "LUMILUX Green B15" and
"LUMILUX Orange B19" (all available from Riedel-de-Haen).

The following are examples of this invention. All parts are by weight.

### Example 1

Ten parts of "UV Yellow Orange FP77" fluorescent pigment (Sterling Colour) were blended with 90 parts of "Johnson and Bloys Silver Ink" (Johnson and Bloys) to produce a modified ink comprising 10 parts fluorescent components, 45 parts metal compound and 45 parts vehicle. The modified ink was used to print portions of a cheque; these portions had a silver appearance under daylight but fluoresced yellow under ultraviolet light.

### Example 2

Example 1 was repeated but with the replacement of the silver ink by "Mander Kidd Extra Middle Gold" ink. The modified ink comprised 10 parts fluorescent component, 50 parts metal compound and 40 parts vehicle. The portions printed with this ink appeared gold under daylight but fluoresced yellow under ultra-violet light.

### Example 3

Example 1 was repeated but with the replacement of "UV Yellow Orange FP77" by the fluorescent brightener"UvitexA" (Ciba-Geigy) to produce a modified ink comprising 15 parts fluorescent components, 45 parts metal compound and 40 parts vehicle. The portions printed with this ink had a silver appearance but fluoresced blue under ultraviolet light.

### Example 4

50 parts of "Novamet Nickel Flake Fine leafing Grade" and 10 parts of europium-doped yttrium oxide (Y₂0₃: Eu) (Riedel-de-Haen) were blended with 40 parts of a low viscosity alkyd varnish to produce a silver ink which was used to print portions of a cheque; these portions appeared silver in daylight but phos- phoresced red under ultra-violet light.

### Example 5

25 parts of "Novamet Nickel Flake Fine Leafing Grade" and 25 parts of the dye "Resolin Brilliant Yellow 10G" (Bayer) were blended with 50 parts of low viscosity alkyd varnish to produce a gold ink which was used to print portions of a cheque; these portions appeared gold in daylight but fluoresced yellow under ultra-violet light.

### Example 6

20 parts of "Wolstenholme Aluminium 150" pow- derand 30 parts of the pigment "Lumogen T Red GG" (BASF) were blended with 50 parts of a low viscosity alkyd varnish to produce a metallic ink with a red lustre which was used to print portions of a cheque; these portions appeared metallic with a red lustre in daylight but fluoresced red under ultra-violet light.

## Claims

1. A printing ink comprising a particulate lustrous metallic component selected from aluminium, nickel, silver, steels, bronzes and brasses; a luminescent material; an inert component comprising a resin or varnish; and no more than 10% by weight of solvent; characterised in that the particles of the lustrous metallic component do not exceed 20 f,.lm in size and in that the composition is substantially homogeneous before and during use.

2. A printing ink as claimed in claim 1, which comprises between 5% and 70% by weight of the metallic component, and between 1% and 60% by weight of the luminescent material.

3. A printing ink as claimed in claim 2, which comprises between 20% and 60% by weight of the metallic component, and between 5% and 40% by weight of the luminescent material.

4. A printing ink as claimed in any preceding claim, in which the inert component is a low viscosity alkyd varnish.

5. A printing ink as claimed in any preceding claim, in which the lustrous metallic component and the luminescent material are each in the form of par- tides less than 10 f..lm in size.

6. A printing ink as claimed in any preceding claim, in which the luminescent material is capable of fluorescing under ultra-violet light.

7. A printing ink as claimed in any preceding claim, in which the luminescent material is a phosphorescent material.

8. A printing ink as claimed in claim 7, in which the phosphorescent material is a rare earth metal compound.

9. A method for printing a substrate, which comprises applying to the substrate a printing ink according to any preceding claim.

## Patentansprüche

1. Drucktinte mit einem feinkörnigen glänzenden metallischen Bestandteil, der aus Aluminium, Nickel, Silber, Stahl, Bronze und Messing ausgewählt ist, einem lumineszierenden Material, einem inerten Bestandteil, der ein Harz oder Lack enthält, und mit nicht mehr als 10 Gew.-% an Lösungsmittel, dadurch gekennzeichnet, daß die Teilchen des glänzenden metallischen Bestandteils eine Größe von 20 µm nicht Uberschreiten und daß die Zusammensetzung vor und während der Benutzung im wesentlichen homogen ist.

2. Drucktinte nach Anspruch 1, die zwischen 5 und 70 Gew.-% des metallischen Bestandteils und zwischen 1 und 60 Gew.-% des lumineszierenden Materials enthält.

3. Drucktinte nach Anspruch 2, die zwischen 20 und 60 Gew.-% des metallischen Bestandteils und zwischen 5 und 40 Gew.-% des lumineszierenden Materials enthält.

4. Drucktinte nach einem der vorhergehenden Ansprüche, bei der der inerte Bestandteil ein Alkydlack mit niedriger Viskosität ist.

5. Drucktinte nach einem der vorhergehenden Ansprüche, bei der der glänzende metallische Bestandteil und das lumineszierende Material jeweils aus Teilchen mit einer Größe von weniger als 10 µm bestehen.

6. Drucktinte nach einem der vorhergehenden Ansprüche, bei der das lumineszierende Material unter ultraviolettem Licht fluoresziert.

7. Drucktinte nach einem der vorhergehenden Ansprüche, bei der das lumineszierende Material ein phosphoreszierendes Material ist.

8. Drucktinte nach Anspruch 7, bei der das phosphoreszierende Material eine Zusammensetzung aus seltenen Erdmetallen ist.

9. Verfahren zum Bedrucken eines Substrats, bei dem eine Drucktinte nach einem der vorhergehenden Ansprüche auf das Substrat aufgebracht wird.

## Revendications

1. Encre d'imprimerie comprenant un composant métallique lustré à fines particules, sélectionné parmi l'aluminium, le nickel, l'argent, les aciers, les bronzes et les laitons, un matériau luminescent, un composant inerte comprenant une résine ou un vernis et une quantité inférieure ou égale à 10 % en poids de solvant, caractérisée en ce que la taille des particules du composant métallique lustré n'excède pas 20 µm et en ce que la composition est pratiquement homogène avant et durant son emploi.

2. Encre d'imprimerie selon la revendication 1, comprenant entre 5 % et 70 % en poids du composant métallique et entre 1 % et 60 % en poids du matériau luminescent.

3. Encre d'imprimerie selon la revendication 2, comprenant entre 20 % et 60 % en poids du composé métallique et entre 5 % et 40 % en poids du matériau luminescent.

4. Encre d'imprimerie selon l'une quelconque des revendications précédentes, dans laquelle le composant inerte est un vernis alkyde à faible viscosité.

5. Encre d'imprimerie selon l'une quelconque des revendications précédentes, dans laquelle le composant métallique lustré et le matériau luminescent se présentent chacun sous la forme de particules de taille inférieure à 10 µm.

6. Encre d'imprimerie selon l'une quelconque des revendications précédentes, dans laquelle le matériau luminescent est susceptible d'être fluorescent à la lumière ultraviolette.

7. Encre d'imprimerie selon l'une quelconque des revendications précédentes, dans laquelle le matériau luminescent est un matériau phosphorescent.

8. Encre d'imprimerie selon la revendication 7, dans laquelle le matériau phosphorescent est un composé métallique des terres rares.

9. Procédé d'impression d'un substrat, comprenant l'application sur le substrat d'une encre d'imprimerie selon l'une quelconque des revendications précédentes.
